# EUROPEAN PATENT APPLICATION

(11) **EP 4 485 660 A1**
(43) Date of publication of application: **01.01.2025**
(21) Application number: 23769768.5
(22) Date of filing: 14.03.2023
(51) Int. Cl.: H01M 50/342

(54) **HOUSING, BATTERY CELL, BATTERY, AND ELECTRICAL DEVICE**

(30) Priority: 14.03.2022 CN 202220547405 U
(71) Applicant: Contemporary Amperex Technology Co., Limited, Ningde, Fujian 352100 (CN)
(72) Inventor: CHEN, Xiaobo, Ningde, Fujian 352100 (CN); GU, Mingguang, Ningde, Fujian 352100 (CN)
(74) Representative: Laufhütte, Dieter
(86) International application number: PCT/CN2023/081331
(87) International publication number: WO 2023/174266

(57) **Abstract**

The present application relates to a housing (21), a battery cell (20), a battery (100), and a power consuming device. The housing (21) is provided with a pressure relief region (210) and a non-pressure relief region (211) surrounding the pressure relief region (210), and the ratio of a thickness dimension of the pressure relief region (210) to a thickness dimension of the non-pressure relief region (211) is greater than or equal to 0.1 and less than 1; and the housing (21) is further provided with a first notch (212), and the first notch (212) is provided at the joint between the pressure relief region (210) and the non-pressure relief region (211), wherein the pressure relief region (210) is configured to open with the first notch (212) as a boundary when the pressure or temperature inside the housing (21) reaches a threshold, so as to release the pressure inside the housing (21). In this way, the thicknesses of two sides of the first notch (212) are unequal, thereby reducing the stiffness gradient; moreover, the pressure relief region (210) is thin and accordingly can absorb and coordinate deformation effectively, avoiding excessive concentration of deformation at the first notch (212), facilitating the improvement in the creep resistance of the housing (21), and thus greatly prolonging the service life of the housing (21).

## Description

### Cross-Reference to Related Applications

The present application refers to Chinese patent application no. 2022205474057, filed on March 14, 2022 and entitled "HOUSING, BATTERY CELL, BATTERY, AND POWER CONSUMING DEVICE", which is incorporated herein by reference in its entirety.

### Technical Field

The present application relates to the technical field of batteries, and in particular to a housing, a battery cell, a battery and a power consuming device.

### Background Art

Batteries are widely used in electronic devices, such as a mobile phone, a notebook computer, an electromobile, an electric vehicle, an electric airplane, an electric ship, an electric toy car, an electric toy ship, an electric toy airplane, and an electric tool. In the development of battery technology, in addition to the improvement in performance of a battery cell, service life thereof is an issue that needs to be considered.

Therefore, how to prolong the service life of a battery cell is an urgent problem to be solved in the battery technology.

### Summary of the Invention

Embodiments of the present application provide a housing, a battery cell, a battery, and a power consuming device, which can effectively prolong the service life of a battery cell.

In a first aspect, the present application provides a housing, the housing being provided with a pressure relief region and a non-pressure relief region surrounding the pressure relief region, and the ratio of a thickness dimension of the pressure relief region to a thickness dimension of the non-pressure relief region being greater than or equal to 0.1 and less than 1; and
the housing being further provided with a first notch, and the first notch being provided at the joint between the pressure relief region and the non-pressure relief region,
wherein the pressure relief region is configured to open with the first notch as a boundary when the pressure or temperature inside the housing reaches a threshold, so as to release the pressure inside the housing.

In the technical solutions of the embodiments of the present application, the housing is designed to have the pressure relief region and the non-pressure relief region, the thickness H1 of the pressure relief region and the thickness dimension of the non-pressure relief region H2 satisfy the formula of 0.1 ≤ H1/H2 < 1, and the first notch is provided at the joint between the pressure relief region and the non-pressure relief region, so that the thicknesses of two sides of the first notch are unequal, thereby reducing the stiffness gradient; moreover, the pressure relief region is thin and accordingly can absorb and coordinate deformation effectively, avoiding excessive concentration of deformation at the first notch, facilitating the improvement in the creep resistance of the housing, and thus greatly prolonging the service life of the housing.

In some embodiments, at least two steps are provided, in a thickness direction, between the first notch and the non-pressure relief region. In this way, on the one hand, the process difficulty can be reduced while improving the forming quality; on the other hand, the stiffness gradient from the non-pressure relief region to the pressure relief region is further increased, facilitating the improvement in the creep resistance of the housing, and thus prolonging the service life of the housing.

In some embodiments, at least one step is provided, in the thickness direction, between the first notch and the pressure relief region. In this way, on the one hand, the process difficulty can be reduced while improving the forming quality; on the other hand, the stiffness gradient from the non-pressure relief region to the pressure relief region is further increased, facilitating the improvement in the creep resistance of the housing, and thus prolonging the service life of the housing.

In some embodiments, two steps are provided, in the thickness direction, between the first notch and the non-pressure relief region, and one step is provided, in the thickness direction, between the first notch and the pressure relief region. In this way, two steps are provided between the first notch and the non-pressure relief region and one step is provided between the first notch and the pressure relief region, which is conducive to reducing the difficulty in stamping of the pressure relief region and the first notch and improving the forming quality on the one hand, and on the other hand, provides a small stiffness gradient from the non-pressure relief region to the pressure relief region, facilitating the improvement in the creep resistance of the housing, and thus prolonging the service life of the housing.

In some embodiments, an accommodating space is formed inside the housing, the housing has a plurality of walls defining the accommodating space, the accommodating space is used for receiving an electrode assembly, and the pressure relief region and the non-pressure relief region are located on a selected wall of the plurality of walls. In this way, the accommodating space for accommodating the electrode assembly is formed inside the housing, and the plurality of walls of the housing define the accommodating space, so that the pressure relief region and the non-pressure relief region are provided on the housing capable of accommodating the electrode assembly, and the housing has both functions of accommodating and pressure relief.

In some embodiments, the selected wall is formed as one piece. In this way, the pressure relief region, the non-pressure relief region, and the first notch are directly processed on the selected wall, without an additional explosion-proof pressure relief structure, which is assembled onto the housing, thereby simplifying the assembly process and facilitating the reduction of manufacturing costs.

In some embodiments, the first notch is provided on an outer surface of the selected wall, and an inner surface of the selected wall is recessed to form a recess; and
in a projection plane perpendicular to a thickness direction of the selected wall, an orthographic projection of the first notch is located within the range of an orthographic projection of the recess. In this way, the inner surface of the selected wall is provided with the recess, a protrusion strip formed by forming the first notch can be located within the recess, thereby reducing the influence of the protrusion strip on the overall flatness of the inner surface of the housing, and avoiding affecting the installation of elements inside the housing.

In some embodiments, there are two first notches, the two first notches being arranged spaced apart from each other; and
the housing is further provided with a second notch formed in the pressure relief region, the second notch intersecting the two first notches. In this way, during pressure relief, the pressure relief region is opened with the two first notches and the second notch, and the pressure relief region has a large opening area, which increases the pressure relief area of the housing, thereby improving the pressure relief rate of the housing, reducing the risks of fire and explosion of the battery cell due to thermal runaway, and improving the reliability of the battery cell.

In some embodiments, the housing is further provided with a third notch formed in the pressure relief region, the third notch being located between the two first notches and intersecting the second notch.

In a second aspect, the present application provides a battery cell, including an electrode assembly and a housing in any above embodiment, the housing being used for accommodating the electrode assembly.

In a third aspect, the present application provides a battery, including a case and a battery cell in any above embodiment, the case being used for accommodating the battery cell.

In a fourth aspect, the present application provides a power consuming device, including a battery in any above embodiment.

The above description is only an overview of the technical solutions of the present application. To more clearly understand the technical means of the present application to implement same according to the contents of the description, and to make the above and other objectives, features, and advantages of the present application more obvious and understandable, specific implementations of the present application are exemplarily described below.

### Brief Description of the Drawings

Various other advantages and benefits will become apparent to those of ordinary skill in the art upon reading the following detailed description of implementations. The accompanying drawings are merely for the purpose of illustrating some of the embodiments, and are not to be construed as limiting the present application. Moreover, like components are denoted by like reference signs throughout the accompanying drawings, in which:
FIG. 1 is a schematic structural diagram of a vehicle according to some embodiments of the present application;
FIG. 2 is a schematic structural diagram of a battery according to some embodiments of the present application;
FIG. 3 is an exploded view of a battery cell according to some embodiments of the present application;
FIG. 4 is a schematic structural diagram of a housing according to some embodiments of the present application;
FIG. 5 is a sectional view of the housing in FIG. 4 along line A-A;
FIG. 6 is a partial enlarged view of the housing in FIG. 5 at part C;
FIG. 7 is a partial enlarged view of the housing in FIG. 4 at part B;
FIG. 8 is a schematic structural diagram of a housing according to some embodiments of the present application;
FIG. 9 is a sectional view of the housing in FIG. 8 along line A-A; and
FIG. 10 is a partially enlarged view of the housing in FIG. 9 at part C.

### Reference signs in the Detailed Description of Embodiments:

vehicle 1000;
battery 100, controller 200, motor 300;
case 10, first portion 11, second portion 12; battery cell 20;
21: housing; 22: electrode assembly; 221: positive tab; 222: negative tab; 23: end cap; 231: positive electrode terminal; 232: negative electrode terminal; 24: insulator; 26: current collecting member;
210: pressure relief region, 211: non-pressure relief region, 212: first notch, 213: second notch, 214: third notch, 215: wall, 215': selected wall, 216: accommodating space, 217: recess;
a1: first weakened part, a2: second weakened part, a3: third weakened part, b1: first step, b2: second step, b3: third step.

### Detailed Description of Embodiments

Embodiments of the technical solutions of the present application will be described in detail below with reference to the accompanying drawings. The following embodiments are merely intended to more clearly illustrate the technical solutions of the present application, so they merely serve as examples, but are not intended to limit the scope of protection of the present application.

Unless otherwise defined, all technical and scientific terms used herein have the same meanings as those commonly understood by those skilled in the art to which the present application belongs. The terms used herein are merely for the purpose of describing specific embodiments, but are not intended to limit the present application. The terms "include/comprise" and "has/have" and any variations thereof in the description and the claims of the present application as well as the brief description of the accompanying drawings described above are intended to cover non-exclusive inclusion.

In the description of the embodiments of the present application, the technical terms "first", "second", etc. are merely used for distinguishing different objects, and are not to be construed as indicating or implying relative importance or implicitly indicating the number, particular order or primary-secondary relationship of the indicated technical features. In the description of the embodiments of the present application, the phrase "a plurality of' means two or more, unless otherwise explicitly and specifically defined.

The phrase "embodiment" mentioned herein means that the specific features, structures, or characteristics described in conjunction with the embodiment can be encompassed in at least one embodiment of the present application. The phrase at various locations in the description does not necessarily refer to the same embodiment, or an independent or alternative embodiment exclusive of another embodiment. Those skilled in the art understand explicitly or implicitly that the embodiment described herein may be combined with another embodiment.

In the description of the embodiments of the present application, the term "and/or" is merely intended to describe the associated relationship of associated objects, indicating that three relationships can exist. For example, A and/or B may include: only A exists, both A and B exist, and only B exists. In addition, the character "/" herein generally indicates an "or" relationship between the associated objects.

In the description of the embodiments of the present application, the term "a plurality of' refers to two or more, and similarly, "a plurality of groups" refers to two or more groups and "a plurality of pieces" refers to two or more pieces.

In the description of the embodiments of the present application, the orientations or positional relationships indicated by the technical terms "central", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", etc. are based on the orientations or positional relationships shown in the accompanying drawings, are merely intended to facilitate and simplify the description of the embodiments of the present application, rather than indicating or implying that the apparatus or element referred to must have a particular orientation or be constructed and operated in a particular orientation, and therefore cannot be construed as limiting the embodiments of the present application.

In the description of the embodiments of the present application, unless otherwise explicitly specified and defined, the technical terms such as "mount", "couple", "connect", and "fix" should be understood in a broad sense. For example, they may be a fixed connection, a detachable connection, or an integrated connection; may be a mechanical connection or an electric connection; or may be a direct connection or an indirect connection by means of an intermediate medium, or may be communication between interiors of two elements or interaction between the two elements. For those of ordinary skill in the art, the specific meanings of the above terms in the embodiments of the present application can be understood according to specific situations.

The term "and/or" in the present application is merely a description of the associated relationship of associated objects, representing that three relationships may exist, for example, A and/or B, may be expressed as: only A exists, both A and B exist, and only B exists. In addition, the character "/" in the present application generally indicates that the associated objects before and after the character are in a relationship of "or".

In the embodiments of the present application, the same reference numerals denote the same components, and for the sake of brevity, the detailed description of the same components is omitted in different embodiments. It should be understood that the dimensions, such as thickness, length and width, of the various components in the embodiments of the present application illustrated in the accompanying drawings, as well as the dimensions, such as an overall thickness, length and width, of an integrated apparatus are merely illustrative and should not be construed to limit the present application in any way.

The phrase "a plurality of" appearing in the present application means two or more.

In the present application, a battery cell may include a lithium-ion secondary battery, a lithium-ion primary battery, a lithium-sulfur battery, a sodium/lithium-ion battery, a sodium-ion battery or a magnesium-ion battery, etc., which will not be limited in the embodiments of the present application. The battery cell may be cylindrical, flat, cuboid or in another shape, which will also not be limited in the embodiments of the present application. The battery cells are generally classified into three types depending on the way of package: cylindrical battery cells, prismatic battery cells and pouch battery cells, which will also not be limited in the embodiments of the present application.

A battery mentioned in the embodiments of the present application refers to a single physical module including one or more battery cells to provide a higher voltage and capacity. For example, the battery mentioned in the present application may include a battery module, a battery pack, etc. The battery generally includes a case for packaging one or more battery cells. The case can prevent liquid or other foreign matters from affecting charging or discharging of the battery cell(s).

The battery cell includes an electrode assembly and an electrolyte. The electrode assembly is composed of a positive electrode plate, a negative electrode plate and a separator. The battery cell operates mainly by relying on movements of metal ions between the positive electrode plate and the negative electrode plate. The positive electrode plate includes a positive electrode current collector and a positive electrode active material layer. A surface of the positive electrode current collector is coated with the positive electrode active material layer, the positive electrode current collector not coated with the positive electrode active material layer protrudes from the positive electrode current collector coated with the positive electrode active material layer, and the positive electrode current collector not coated with the positive electrode active material layer serves as a positive tab. Taking a lithium-ion battery as an example, the positive electrode current collector may be made of aluminum, and the positive electrode active material may be lithium cobalt oxide, lithium iron phosphate, ternary lithium, lithium manganate, etc. The negative electrode plate includes a negative electrode current collector and a negative electrode active material layer. A surface of the negative electrode current collector is coated with the negative electrode active material layer, the negative electrode current collector not coated with the negative electrode active material layer protrudes from the negative electrode current collector coated with the negative electrode active material layer, and the negative electrode current collector not coated with the negative electrode active material layer serves as a negative tab. The negative electrode current collector may be made of copper, and the negative electrode active material may be carbon, silicon, etc. In order to ensure that no fusing occurs when a large current passes, a plurality of positive tabs are provided and are stacked together, and a plurality of negative tabs are provided and are stacked together. The separator may be made of polypropylene (PP) or polyethylene (PE), etc. In addition, the electrode assembly may be of a wound structure or a laminated structure, which will not be limited in the embodiments of the present application.

Design factors on many aspects need to be simultaneously considered for the development of the battery technology, such as energy density, cycling life, discharge capacity, charge-discharge rate, and other performance parameters. In addition, the reliability of the battery needs to be considered.

For the battery cell, a pressure relief apparatus is generally provided in the battery cell to ensure the reliability of the battery cell, so that when the pressure or temperature inside the battery cell reaches a threshold, the pressure inside the battery cell is released via the pressure relief apparatus to ensure the reliability of the battery cell.

The inventor has found that for the existing pressure relief apparatus, a notch is generally provided on a pressure relief body, and the pressure relief body cracks from the position of the notch during pressure relief, so as to discharge emissions from the position of the notch to achieve the purpose of pressure relief. The inventor further discovered that during long-term use, the pressure inside the battery cell (less than a threshold) causes a creep of the pressure relief body, causing the pressure relief body to crack from the position of the notch even if the pressure inside the battery cell is less than the threshold, which seriously affects the service life of the battery cell.

In view of this, embodiments of the present application provide a housing. The housing is provided with a pressure relief region and a non-pressure relief region, the thickness of the pressure relief region is less than the thickness of the non-pressure relief region, and a first notch is provided between the pressure relief region and the non-pressure relief region. The pressure relief region is configured to open with the first notch as a boundary when the pressure or temperature inside the housing reaches a threshold, so as to release the pressure inside the housing.

In such a housing, the thickness of the non-pressure relief region on one side of the first notch is large, and the thickness of the pressure relief region on the other side thereof is small, thereby reducing the stiffness gradient of the housing, facilitating the improvement in the creep resistance of the housing, preventing the pressure relief region from opening with the first notch as the boundary due to the creep in the long-term use, and thus greatly prolonging the service life.

The housing described in the embodiments of the present application is applicable to a battery cell, a battery, and a power consuming device using the battery.

The power consuming device may be a vehicle, a mobile phone, a portable device, a notebook computer, a ship, a spacecraft, an electric toy, an electric tool, etc. The vehicle may be a fuel vehicle, a gas vehicle or a new-energy vehicle. The new-energy vehicle may be a battery electric vehicle, a hybrid vehicle, an extended-range vehicle, etc. The spacecraft includes an airplane, a rocket, an aerospace plane, a spaceship, etc. The electric toy includes a stationary or mobile electric toy, such as a game machine, an electric toy car, an electric toy ship, and an electric toy airplane. The electric tool includes a metal cutting electric tool, a grinding electric tool, an assembling power tool, and a railway power tool, such as an electric drill, an electric grinder, an electric wrench, an electric screwdriver, an electric hammer, an electric impact drill, a concrete vibrator, and an electric planer. The power consuming devices described above are not specially limited in the embodiments of the present application.

For ease of description, an example in which the power consuming device refers to a vehicle is used for description in the following embodiments.

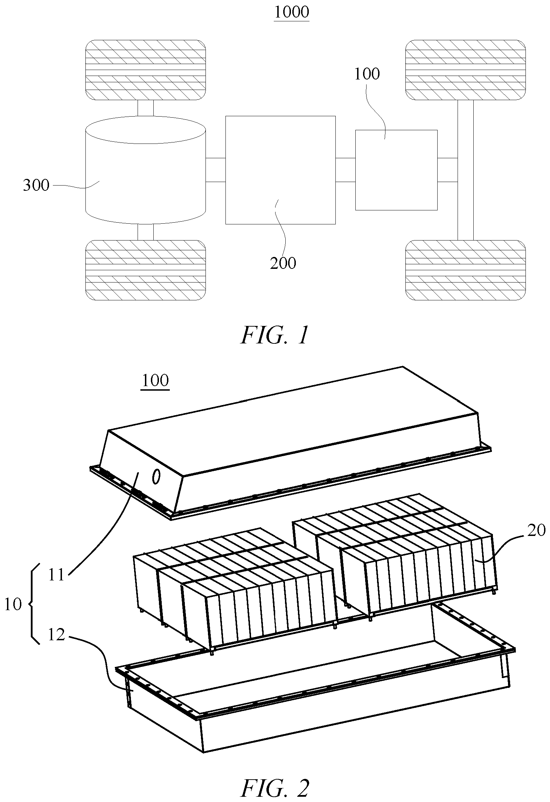

With reference to FIG. 1, FIG. 1 is a schematic structural diagram of a vehicle 1000 according to some embodiments of the present application, where a battery 100 is provided inside the vehicle 1000, and the battery 100 may be arranged at the bottom, the head, or the tail of the vehicle 1000. The battery 100 may be used for supplying power to the vehicle 1000. For example, the battery 100 may serve as a power supply for operating the vehicle 1000.

The vehicle 1000 may further include a controller 200 and a motor 300. The controller 200 is configured to control the battery 100 to supply power to the motor 300, for example, to meet working power requirements during starting, navigation and traveling of the vehicle 1000.

In some embodiments of the present application, the battery 100 can not only serve as a power supply for operating the vehicle 1000, but can also serve as a power supply for driving the vehicle 1000, in place of or partially in place of fuel or natural gas, to provide driving power for the vehicle 1000.

Referring to FIG. 2, FIG. 2 is a schematic structural diagram of a battery 100 according to some embodiments of the present application, where the battery 100 includes a case 10 and a battery cell 20, and the case 10 is used for accommodating the battery cell 20.

The case 10 herein is a component for accommodating the battery cell 20, the case 10 provides an accommodating space 216 for the battery cell 20, and the case 10 may be of various structures. In some embodiments, the case 10 may include a first portion 11 and a second portion 12. The first portion 11 and the second portion 12 covers each other to define the accommodating space 216 for accommodating the battery cell 20. The first portion 11 and the second portion 12 may have various shapes, such as a cuboid and a cylinder. The first portion 11 may be of a hollow structure with one side open, the second portion 12 may also be of a hollow structure with one side open, and the open side of the second portion 12 covers the open side of the first portion 11, such that the case 10 having the accommodating space 216 is formed. Alternatively, the first portion 11 is of a hollow structure with an open side, the second portion 12 is of a plate structure, and the second portion 12 covers the open side of the first portion 11, such that the case 10 having the accommodating space 216 is formed. The first portion 11 and the second portion 12 may be sealed by a sealing element which may be a seal ring, a sealant, etc.

In the battery 100, one or more battery cells 20 may be provided. If a plurality of battery cells 20 are provided, the plurality of battery cells 20 may be connected in series, in parallel, or in series-parallel. The series-parallel connection refers that some of the plurality of battery cells 20 are connected in series and the rest are connected in parallel. It is possible that a plurality of battery cells 20 are first connected in series or in parallel or in series-parallel to form a battery module, and a plurality of battery modules are then connected in series or in parallel or in series-parallel to form a unit and are accommodated in the case 10. Alternatively, all the battery cells 20 are directly connected in series, in parallel, or in series-parallel, and a unit composed of all the battery cells 20 is then accommodated in the case 10.

In some embodiments, the battery 100 may further include a busbar component, and the plurality of battery cells 20 may be electrically connected to each other by means of the busbar component, so that the plurality of battery cells 20 are connected in series, in parallel or in series-parallel. The busbar component may be a conductor made of metal, such as copper, iron, aluminum, stainless steel, and aluminum alloy.

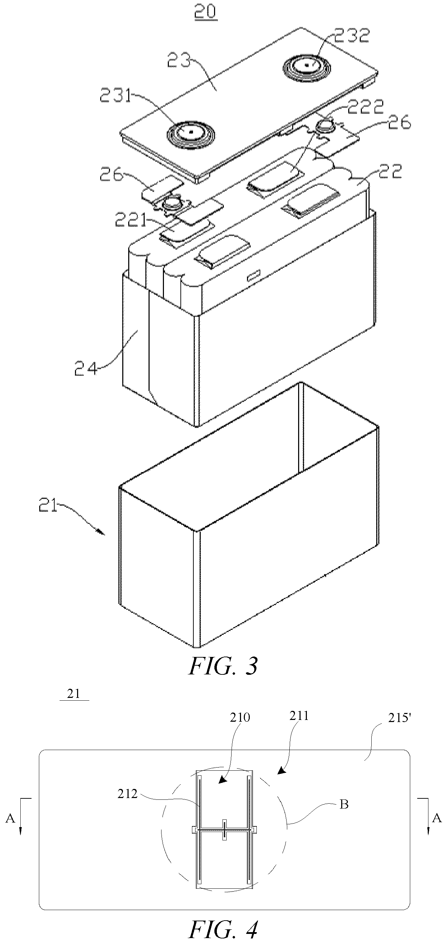

Referring to FIG. 3, FIG. 3 is an exploded view of a battery cell 20 according to some embodiments of the present application. The battery cell 20 includes a housing 21, an electrode assembly 22, an end cap 23 and an insulator 24.

The housing 21 is a component for accommodating the electrode assembly 22, and the housing 21 may be of a hollow structure having an opening formed at one end. The housing 21 may have various shapes, such as a cylinder and a cuboid. The housing 21 may be made of various materials, such as copper, iron, aluminum, steel, and aluminum alloy.

One or more electrode assemblies 22 may be provided in the housing 21. For example, as shown in FIG. 3, a plurality of electrode assemblies 22 are provided, and the plurality of electrode assemblies 22 are arranged in a stacked manner.

The electrode assembly 22 is a component of the battery cell 20 where an electrochemical reaction occurs. The electrode assembly 22 may include a positive electrode plate, a negative electrode plate, and a separator. The electrode assembly 22 may be of a wound structure formed by winding the positive electrode plate, the separator and the negative electrode plate, or a laminated structure formed by laminating the positive electrode plate, the separator and the negative electrode plate.

The positive electrode plate may include a positive electrode current collector and positive electrode active material layers coated on two opposite sides of the positive electrode current collector. The negative electrode plate may include a negative electrode current collector and negative electrode active material layers coated on two opposite sides of the negative electrode current collector. The electrode assembly 22 is provided with a positive tab 221 and a negative tab 222. The positive tab 221 may be a portion of the positive electrode plate that is not coated with the positive electrode active material layer, and the negative tab 222 may be a portion of the negative electrode plate that is not coated with the negative electrode active material layer.

The end cap 23 is a component that covers the opening of the housing 21 to isolate an internal environment of the battery cell 20 from an external environment. The end cap 23 covers the opening of the housing 21, and the end cap 23 and the housing 21 together define a sealed space for receiving the electrode assembly 22, the electrolyte and other components. The shape of the end cap 23 may match the shape of the housing 21. For example, the housing 21 is of a cuboid structure, and the end cap 23 is of a rectangular plate structure matching the housing 21. For another example, the housing 21 is of a cylindrical structure, and the end cap 23 is of a circular plate structure matching the housing 21. The end cap 23 may also be made of various materials, such as copper, iron, aluminum, steel, and aluminum alloy. The end cap 23 may be of the same material as or a different material from the housing 21.

The end cap 23 may be provided with an electrode terminal. The electrode terminal is used for electrical connection to the electrode assembly 22, so as to output electric energy of the battery cell 20. The electrode terminal may include a positive electrode terminal 231 and a negative electrode terminal 232. The positive electrode terminal 231 is used for electrical connection to the positive tab 221, and the negative electrode terminal 232 is used for electrical connection to the negative tab 222. The positive electrode terminal 231 may be directly or indirectly connected to the positive tab 221, and the negative electrode terminal 232 may be directly or indirectly connected to the negative tab 222. Illustratively, the positive electrode terminal 231 is electrically connected to the positive tab 221 by means of a current collecting member 26, and the negative electrode terminal 232 is electrically connected to the negative tab 222 by means of a further current collecting member 26.

The insulator 24 is a component that insulates the housing 21 from the electrode assembly 22, and insulation and isolation of the housing 21 from the electrode assembly 22 are achieved by the insulator 24. The insulator 24 is made of an insulating material, and the insulator 24 may be made of an insulating material such as plastic and rubber. Illustratively, the outer periphery of the electrode assembly 22 is circumferentially wrapped with the insulator 24. It can be understood that, when a plurality of electrode assemblies 22 are provided, the outer periphery of the plurality of electrode assemblies 22 as a whole is circumferentially wrapped with the insulator 24.

With reference to FIG. 4, FIG. 4 is a schematic structural diagram of a housing according to some embodiments of the present application. The housing 21 is used for the battery cell 20. The housing 21 is provided with a pressure relief region 210 and a non-pressure relief region 211 surrounding the pressure relief region 210. The ratio of a thickness dimension (defined as H1) of the pressure relief region 210 to a thickness dimension (defined as H2) of the non-pressure relief region 211 is greater than or equal to 0.1 and less than 1, i.e., 0.1 ≤ H1/H2 < 1. The housing 21 is further provided with a first notch 212, and the first notch 212 is provided at the j oint between the pressure relief region 210 and the non-pressure relief region 211. The pressure relief region 210 is configured to open with the first notch 212 as a boundary when the pressure or temperature inside the housing 21 reaches a threshold, so as to release the pressure inside the housing 21.

The thickness dimension of the pressure relief region 210 and the thickness dimension of the non-pressure relief region 211 of the housing 21 satisfying the formula of 0.1 ≤ H1/H2 < 1 means that the thickness dimension of the pressure relief region 210 is less than the thickness dimension of the non-pressure relief region 211 and is greater than or equal to 0.1 times the thickness of the non-pressure relief region 211.

The housing 21 is designed to have the pressure relief region 210 and the non-pressure relief region 211, the thickness dimension of the pressure relief region 210 and the thickness dimension of the non-pressure relief region 211 satisfy the formula of 0.1 ≤ H1/H2 < 1, and the first notch 212 is provided at the joint between the pressure relief region 210 and the non-pressure relief region 211, so that the thicknesses of two sides of the first notch 212 are unequal, thereby reducing the stiffness gradient; moreover, the pressure relief region 210 is thin and accordingly can absorb and coordinate deformation effectively, avoiding excessive concentration of deformation at the first notch 212, facilitating the improvement in the creep resistance of the housing 21, and thus greatly prolonging the service life of the housing 21.

According to some embodiments of the present application, optionally, with reference to FIGS. 4 to 6, at least two steps are provided, in a thickness direction, between the first notch 212 and the non-pressure relief region 211.

At least two steps are designed, in the thickness direction, between the first notch 212 and the non-pressure relief region 211, so that multiple stamping can be adopted, that is, one step is formed by stamping once, and two steps are formed by stamping twice, and so on. In this way, on the one hand, the process difficulty can be reduced while improving the forming quality; on the other hand, the stiffness gradient from the non-pressure relief region 211 to the pressure relief region 210 is further increased, facilitating the improvement in the creep resistance of the housing 21, and thus prolonging the service life of the housing 21.

According to some embodiments of the present application, optionally, with continued reference to FIGS. 4 to 6, at least one step is provided, in the thickness direction, between the first notch 212 and the non-pressure relief region 210.

At least one step is designed, in the thickness direction, between the first notch 212 and the non-pressure relief region 210, so that multiple stamping can be adopted, that is, one step is formed by stamping once, and two steps are formed by stamping twice, and so on. In this way, on the one hand, the process difficulty can be reduced while improving the forming quality; on the other hand, the stiffness gradient from the non-pressure relief region 211 to the pressure relief region 210 is further increased, facilitating the improvement in the creep resistance of the housing 21, and thus prolonging the service life of the housing 21.

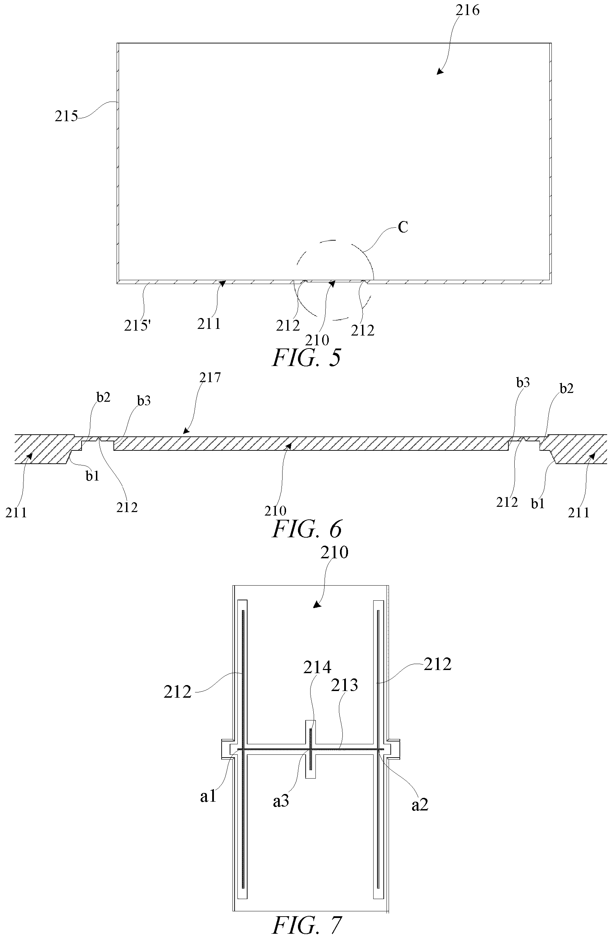

According to some embodiments of the present application, optionally, with continued reference to FIG. 6, two steps are provided, in the thickness direction, between the first notch 212 and the non-pressure relief region 211, and the two steps are respectively a first step b1 and a second step b2. Moreover, one step, i.e., a third step b3, is provided, in the thickness direction, between the first notch 212 and the pressure relief region 210.

Two steps are provided between the first notch 212 and the non-pressure relief region 211 and one step is provided between the first notch and the pressure relief region 210, which is conducive to reducing the difficulty in stamping of the pressure relief region 210 and the first notch 212 and improving the forming quality on the one hand, and on the other hand, provides a small stiffness gradient from the non-pressure relief region 211 to the pressure relief region 210, facilitating the improvement in the creep resistance of the housing 21, and thus prolonging the service life of the housing 21.

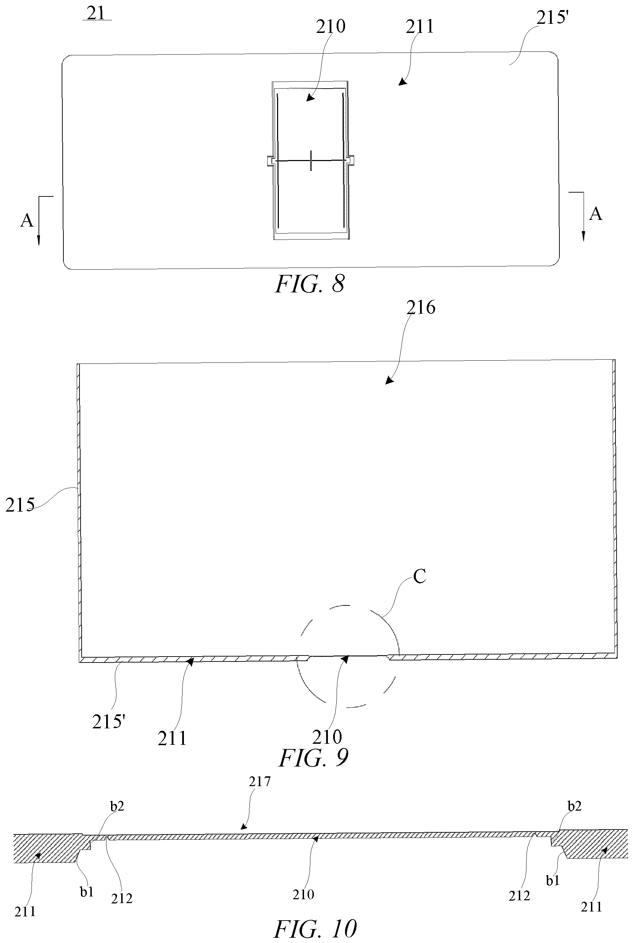

According to some embodiments of the present application, optionally, with continued reference to FIGS. 8 to 10, two steps are provided, in the thickness direction, between the first notch 212 and the non-pressure relief region 211, and the two steps are respectively a first step b1 and a second step b2. No step is provided, in the thickness direction, between the first notch 212 and the pressure relief region 210.

Since two steps are provided between the first notch 212 and the non-pressure relief region 211 and no step is provided between the first notch and the pressure relief region 210, on the basis of ensuring the low difficulty in stamping of the pressure relief region 210 and the first notch 212 and the forming quality meeting the design requirements, a small stiffness gradient from the non-pressure relief region 211 to the pressure relief region 210 is provided, the creep resistance of the housing 21 is better, and the service life of the housing 21 meets the requirements.

According to some embodiments of the present application, optionally, with continued reference to FIGS. 4 and 5, an accommodating space 216 is formed inside the housing 21, and the housing 21 has a plurality of walls 215 defining the accommodating space 216. The accommodating space 216 is used for receiving an electrode assembly 22. The pressure relief region 210 and the non-pressure relief region 211 are located on a selected wall 215' of the plurality of walls 215.

The housing 21 may have various shapes, such as a cuboid and a cylinder. Taking a cuboid housing 21 as an example, the housing 21 may have five walls 215; a bottom wall and four side walls together enclose the accommodating space 216 with an opening at one end; the bottom wall is the selected surface 215' described above (that is, the bottom wall is provided with the pressure relief region 210 and the non-pressure relief region 211). Taking a cylindrical housing 21 as an example, the housing 21 may have two walls 215, i.e., a bottom wall and a circumferential wall; the circumferential wall is disposed circumferentially on the edge of the bottom wall, the circumferential wall and the bottom wall together enclose the accommodating space 216 with an opening at one end; and the bottom wall is the selected wall 215' described above (that is, the bottom wall is provided with the pressure relief region 210 and the non-pressure relief region 211).

In this embodiment, the accommodating space 216 for accommodating the electrode assembly 22 is formed inside the housing 21, and the plurality of walls 215 of the housing 21 define the accommodating space 216, so that the pressure relief region 210 and the non-pressure relief region 211 are provided on the housing 21 capable of accommodating the electrode assembly 22, and the housing 21 has both functions of accommodating and pressure relief.

According to some embodiments of the present application, optionally, the selected wall 215' described above is formed as one piece, that is, the pressure relief region 210, the non-pressure relief region 211, and the first notch 212 are directly processed on the selected wall 215', without an additional explosion-proof pressure relief structure, which is assembled onto the housing 21, thereby simplifying the assembly process and facilitating the reduction of manufacturing costs.

According to some embodiments of the present application, optionally, with continued reference to FIG. 6, the first notch 212 is provided on an outer surface of the selected wall 215', and an inner surface of the selected wall 215' is recessed to form a recess 217.

In a projection plane perpendicular to a thickness direction of the selected surface 215', an orthographic projection of the first notch 212 is located within the range of an orthographic projection of the recess 217.

During stamping of the first notch 212, since there is a situation where the material is difficult to flow and accumulates, a protrusion strip may be formed on the inner surface of the selected wall 215' at a position corresponding to the position of the first notch 212, which reduces the overall flatness of the inner surface of the housing 21 and affects the installation of elements inside the housing 21.

In this embodiment, the inner surface of the selected wall 215' is provided with the recess 217, the protrusion strip formed by forming the first notch 212 can be located within the recess 217, thereby reducing the influence of the protrusion strip on the overall flatness of the inner surface of the housing 21, and avoiding affecting the installation of the elements inside the housing 21.

According to some embodiments of the present application, optionally, with reference to FIG. 7, there are two first notches 212, the two first notches 212 being arranged spaced apart from each other. The housing 21 is further provided with a second notch 213 formed in the pressure relief region 210, the second notch 213 intersecting the two first notches 212. The pressure relief region 210 is opened with the first notches 212 and the second notch 213 as boundaries when the pressure or temperature inside the housing 21 reaches a threshold, so as to release the pressure inside the housing 21.

The first notches 212 and the second notch 213 may be linear grooves. The two first notches 212 may be arranged in parallel or non-parallel; and the second notch 213 may be arranged perpendicular or non-perpendicular to the first notches 212.

It should be noted that there is no limitation on the position of the second notch 213 between the two first notches 212. For example, the second notch 213 is arranged at the same end of the two first notches 212, and the two first notches 212 and the second notch 213 form an approximate "U"-shaped structure. For another example, the second notch 213 is arranged in the middle of the two first notches 212, and the two first notches 212 and the second notch 213 form an approximate "H"-shaped structure.

Since the two first notches 212 are arranged spaced apart from each other, and the two first notches 212 each intersect the second notch 213, the pressure relief region 210 is opened with the two first notches 212 and the second notch 213 as boundaries when the pressure or temperature inside the housing 21 reaches a threshold due to thermal runaway of the battery cell, so as to achieve the purpose of releasing the pressure inside the housing 21. During pressure relief, the pressure relief region 210 is opened with the two first notches 212 and the second notch 213, and the pressure relief region 210 has a large opening area, which increases the pressure relief area of the housing 21, thereby improving the pressure relief rate of the housing 21, reducing the risks of fire and explosion of the battery cell due to thermal runaway, and improving the reliability of the battery cell.

According to some embodiments of the present application, optionally, with continued reference to FIG. 7, the housing 21 is further provided with a third notch 214 formed in the pressure relief region 210. The third notch 214 is located between the two first notches 212 and intersects the second notch 213.

Since the second notch 213 intersects one of the first notches 212, a first weakened part a1 is formed at the intersection of the two; since the second notch 213 intersects the other one of the first notches 212, a second weakened part a2 is formed at the intersection of the two; and since the second notch 213 intersects the third notch 214, a third weakened part a3 is formed at the intersection of the two. That is, the second notch 213 has the first weakened part a1, the second weakened part a2 and the third weakened part a3 in its extension direction. When the pressure or temperature inside the housing 21 reaches a threshold, the second notch 213 cracks and forms a crack from the third weakened part a3 toward the first weakened part a1 and the second weakened part a2 to allow the pressure relief region 210 to be opened along the two first notches 212 after formation of the crack.

In this embodiment, the third weakened part a3 is located between the first weakened part a1 and the second weakened part a2, and the third weakened part a3 is a pressure relief starting position; when the pressure or temperature inside the battery cell 20 reaches a threshold, the pressure relief region 210 will crack along the second notch 213 from the third weakened part a3 toward the first weakened part a1 and the second weakened part a2 on two sides; subsequently, the pressure relief region 210 will be cracked along the second notch 213, so that the pressure relief region 210 is opened along the two first notches 212 after cracking along the second notch 213, thereby realizing quick opening of the pressure relief region 210 and improving the pressure relief efficiency.

According to some embodiments of the present application, the present application further provides a battery cell 20, including an electrode assembly 21 and a housing 22 as described in any above solution, the housing 21 being used for accommodating the electrode assembly 22.

According to some embodiments of the present application, the present application further provides a battery 101, including a case 10 and a battery cell 20 as described in any above solution, the case 10 being used for accommodating the battery cell 20.

According to some embodiments of the present application, the present application further provides a power consuming device, including a battery 100 as described in any above solution. The battery 100 is used for providing electrical energy for the power consuming device.

The power consuming device may be any one of the above apparatuses or systems using the battery.

According to some embodiments of the present application, with reference to FIGS. 4 to 7, the present application provides a housing 21 of a battery cell. A bottom wall of the housing 21 is provided with a pressure relief region 210 and a non-pressure relief region 211 surrounding the pressure relief region 210, and the ratio of a thickness dimension of the pressure relief region 210 to a thickness dimension of the non-pressure relief region 211 is greater than or equal to 0.1 and less than 1. Two first notches 212, a second notch 213, and a third notch 214 are further formed on an outer surface of the bottom wall of the housing 21. The two first notches 212 are located on opposite sides of the pressure relief region 210, and both are located at the joint between the pressure relief region 210 and the non-pressure relief region 211. The second notch 213 is located between the two first notches 212, and two ends of the second notch 213 intersect central portions of the two first notches 212, respectively. The third notch 214 is located between the two first notches 212 and intersects a central portion of the second notch 213.

Finally, it should be noted that the above embodiments are merely used for illustrating rather than limiting the technical solutions of the present application. Although the present application has been illustrated in detail with reference to the foregoing embodiments, it should be understood by those of ordinary skill in the art that the technical solutions described in the foregoing embodiments may still be modified, or some or all of the technical features thereof may be equivalently substituted; and such modifications or substitutions do not make the essence of the corresponding technical solution depart from the scope of the technical solutions of the embodiments of the present application, and should fall within the scope of the claims and the description of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. A housing, **characterized in that** the housing is provided with a pressure relief region (210) and a non-pressure relief region (211) surrounding the pressure relief region (210), and the ratio of a thickness dimension of the pressure relief region (210) to a thickness dimension of the non-pressure relief region (211) is greater than or equal to 0.1 and less than 1; and
the housing (21) is further provided with a first notch (212), and the first notch (212) is provided at the joint between the pressure relief region (210) and the non-pressure relief region (211),
wherein the pressure relief region (210) is configured to open with the first notch (212) as a boundary when the pressure or temperature inside the housing (21) reaches a threshold, so as to release the pressure inside the housing (21).

2. The housing according to claim 1, **characterized in that** at least two steps are provided, in a thickness direction, between the first notch (212) and the non-pressure relief region (211).

3. The housing according to claim 1 or 2, **characterized in that** at least one step is provided, in the thickness direction, between the first notch (212) and the pressure relief region (210).

4. The housing according to any one of claims 1 to 3, **characterized in that** two steps are provided, in the thickness direction, between the first notch (212) and the non-pressure relief region (211), and one step is provided, in the thickness direction, between the first notch (212) and the pressure relief region (210).

5. The housing according to any one of claims 1 to 4, **characterized in that** an accommodating space (216) is formed inside the housing (21), the housing (21) has a plurality of walls (215) defining the accommodating space (216), the accommodating space (216) is used for receiving an electrode assembly (22), and the pressure relief region (210) and the non-pressure relief region (211) are located on a selected wall (215') of the plurality of walls (215).

6. The housing according to claim 5, **characterized in that** the selected wall (215') is formed as one piece.

7. The housing according to claim 5 or 6, **characterized in that** the first notch (212) is provided on an outer surface of the selected wall (215'), and an inner surface of the selected wall (215') is recessed to form a recess (217); and
in a projection plane perpendicular to a thickness direction of the selected wall (215'), an orthographic projection of the first notch (212) is located within the range of an orthographic projection of the recess (217).

8. The housing according to any one of claims 1 to 7, **characterized in that** there are two first notches (212), the two first notches (212) being arranged spaced apart from each other; and
the housing (21) is further provided with a second notch (213) formed in the pressure relief region (210), the second notch (213) intersecting the two first notches (212).

9. The housing according to claim 8, **characterized in that** the housing (21) is further provided with a third notch (214) formed in the pressure relief region (210), the third notch (214) being located between the two first notches (212) and intersecting the second notch (213).

10. A battery cell, **characterized by** comprising an electrode assembly and a housing according to any one of claims 1 to 9, the housing being used for accommodating the electrode assembly.

11. A battery, **characterized by** comprising a case and a battery cell according to claim 10, the case being used for accommodating the battery cell.

12. A power consuming device, **characterized by** comprising a battery according to claim 11.
